# EUROPEAN PATENT SPECIFICATION

(11) **EP 3 733 432 B1**
(45) Date of publication and mention of the grant of the patent: **12.07.2023**
(21) Application number: 19172195.0
(22) Date of filing: 02.05.2019
(51) Int. Cl.: B60D 1/14, B60D 1/24, B60T 7/20, B60D 1/04, B60D 1/44, B61D 11/00, B61G 1/36

(54) **TOWING ARRANGEMENT AND MINE MACHINE**
SCHLEPPANORDNUNG UND BERGBAUMASCHINE
AGENCEMENT DE REMORQUAGE ET MACHINE DE MINE

(43) Date of publication of application: 04.11.2020
(73) Proprietor: Sandvik Mining and Construction Oy, 33311 Tampere (FI)
(72) Inventor: HIMANEN, Timo, 20101 Turku (FI)
(74) Representative: Sandvik

(56) References cited:
- EP-A1- 3 415 398
- WO-A1-2015/073960
- CN-A- 103 434 351
- US-A1- 2004 066 089

## Description

### BACKGROUND

The invention relates to a towing arrangement for a mine machine.

The invention further relates to a mine machine.

For safety reasons, many mine machines use hydraulically-released brake systems to provide automatic fail-safe braking on loss of vehicle power or hydraulic fluid pressure. Such brakes prevent a disabled machine from easily being towed. In order to tow the disabled machine easily, it is known to provide towing or retrieval hook of such a mine machine with a releasing arrangement that releases brake when the machine is towed from the hook, thus permitting the towing of the disabled mine machine. Some priorly known towing arrangements are disclosed in patent publications WO 2015/073960 A1 and EP 3415398 A1.

However, existing releasing arrangements are often large and their structure susceptible to be damaged in harsh environment of mines.

### BRIEF DESCRIPTION

Viewed from a first aspect, there can be provided a towing arrangement for a mine machine, comprising
- a body part,
- a towing element for allowing a towing tool to be connected to the towing arrangement,
- the towing element being attached to the body part,
- a hydraulic actuator,
- a first part of the hydraulic actuator attached to the body part, and
- a second part of the hydraulic actuator attachable to a support element,
- the support element, when the towing arrangement being attached to the mine machine, being fixed to said mine machine,
- the body part being arranged movable in relation to the support element,
- the body part being arranged to move in relation to the support element when a towing force is affecting to the towing element, and
- the hydraulic actuator is arranged to get shorter along with said towing force affecting to the towing element, wherein
- the hydraulic actuator comprises connectors for connection to a hydraulic circuit of a braking system of the mine machine, and
- hydraulic pressure created in the hydraulic actuator due to the towing force affecting to the towing element is arranged to release brakes of the mine machine.

Thereby a towing arrangement for a mine machine being compact in size and easy to arrange, even to retrofit, in a mine machine may be achieved.

Viewed from a further aspect, there can be provided a mine machine comprising the towing arrangement mentioned above.

Thereby a mine machine the towing arrangement of which is compact in size and well protected may be achieved.

In one embodiment, the towing element comprises a hook. An advantage is that the hook is easy and fast to use in towing.

In one embodiment, the hydraulic actuator 3 comprises a hydraulic cylinder. An advantage is that hydraulic cylinders have a simple structure and they are straightforwardly adaptable to the arrangement.

In one embodiment, the arrangement comprises at least two hydraulic actuators. An advantage is that smaller actuators may be used without compromising volume flow of hydraulic fluid created by the arrangement and fed in the braking system of the mine machine.

In one embodiment, the arrangement comprises at least two hydraulic actuators being arranged symmetrically in relation to a longitudinal axis of the arrangement. An advantage is that a stable movement of the frame may be achieved.

In one embodiment, the body part comprises at least one extension arranged to extend sideward in relation to the longitudinal axis of the arrangement, the first part of the hydraulic actuator being attached to the extension, and the extension being arranged to forward the movement of the towing element in the hydraulic actuator. An advantage is that the hydraulic actuator may be arranged laterally in relation to the frame, and thus the length of the arrangement reduced.

In one embodiment, the arrangement comprises a returning element arranged to return the body part in its initial position in relation to the support element when towing element is released from the towing force. An advantage is that the body part may return quickly to the original position as before starting the towing action and the brakes of the mine machine go on.

In one embodiment, the returning element comprises at least one spring element. An advantage is that spring elements are simple and cost-effective mechanical parts.

In one embodiment, the arrangement comprises a stopper arrangement for transferring towing forces from the body part to the frame of the machine. An advantage is that the forces do not focus on the hydraulic actuator and/or the returning element.

In one embodiment, the hydraulic actuator is arranged at least substantially parallel to a moving direction of the body part. An advantage is that the movement of the body part is transferred directly to the actuator.

In one embodiment, the hydraulic actuator comprises connectors for connection to a hydraulic circuit of a braking system of the mine machine, and wherein hydraulic pressure created in the hydraulic actuator due to the towing force affecting to the towing element is arranged to release brakes of the mine machine. An advantage is that the arrangement controls the braking system in a simple way.

In one embodiment, the support element comprises attaching means for attachment the support element to the mine machine. An advantage is that the support element may be manufactured separate from the structure of the mine machine.

In one embodiment, the arrangement is formed into a structural module retrofittable in a mine machine. An advantage is that mine machines without the towing arrangement may be equipped with the arrangement.

In one embodiment, a frame part of the mine machine is arranged to perform as the support element. An advantage is that the structure of the towing arrangement may be simplified.

### BRIEF DESCRIPTION OF FIGURES

Some embodiments illustrating the present disclosure are described in more detail in the attached drawings, in which
Figure 1 is a schematic view of a part of a mine machine, and
Figures 2a - 2d are schematic views of a detail of an arrangement in partial cross-section.

In the figures, some embodiments are shown simplified for the sake of clarity. Similar parts are marked with the same reference numbers in the figures.

### DETAILED DESCRIPTION

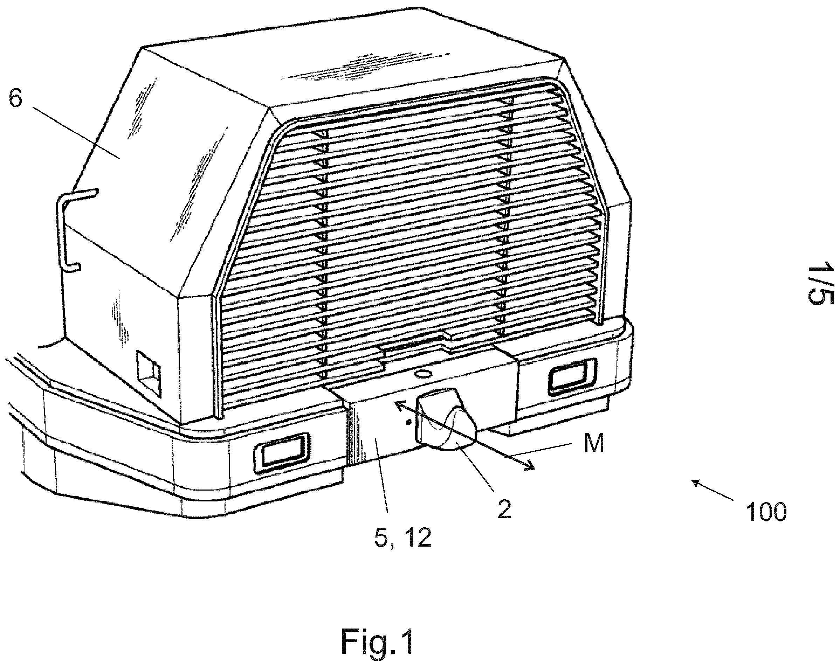

**Figure 1** is a schematic view of a part of a mine machine.

The mine machine 6 may be e.g. a wheel loader. However, the mine machine 6 may be any type of a mining vehicle or a construction vehicle. The mine machine 6 may be provided with one or more working devices for executing designed work tasks at the work site. Thus, the mine machine 6 may also be a transport vehicle or dumper, a rock drilling rig, a bolting or reinforcing machine or a measuring machine, for example.

The mine machine 6 comprises a towing arrangement 100 for towing the machine. The towing arrangement 100 comprises a body part (not shown in Figure 1) and a towing element 2 for allowing a towing tool to be connected to the towing arrangement 100 and thereby to the mine machine 6.

The towing arrangement 100 is further provided with a hydraulic actuator (not shown In Figure 1) that comprises a first part attached to the body part, and a second part attachable to a support element 5.

The support element 5 is fixed to the mine machine 6. In an embodiment, a frame part 12 of the mine machine 6 is arranged to perform as said support element 5. In another embodiment, the support element 5 is an additional element, i.e. not a part of the frame of the mine machine 6, that comprises attaching means by which the support element can be attached to the mine machine 6. The attaching means may comprise e.g. bolts or screws and corresponding holes. Thus, the arrangement 100 may be a structural module that is retrofittable in mine machines.

The body part is movable in relation to the support element 5 in moving directions M so that the body part moves in relation to the support element 5 when a towing force is affecting to the towing element 2.

The structure and the features of the towing arrangement 100 are described more detailed in connection with the following figures.

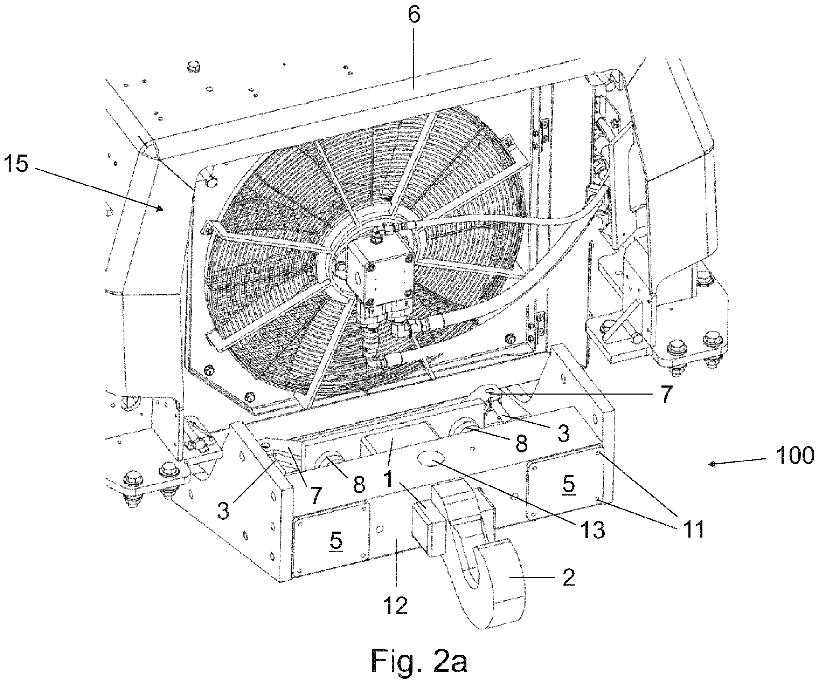

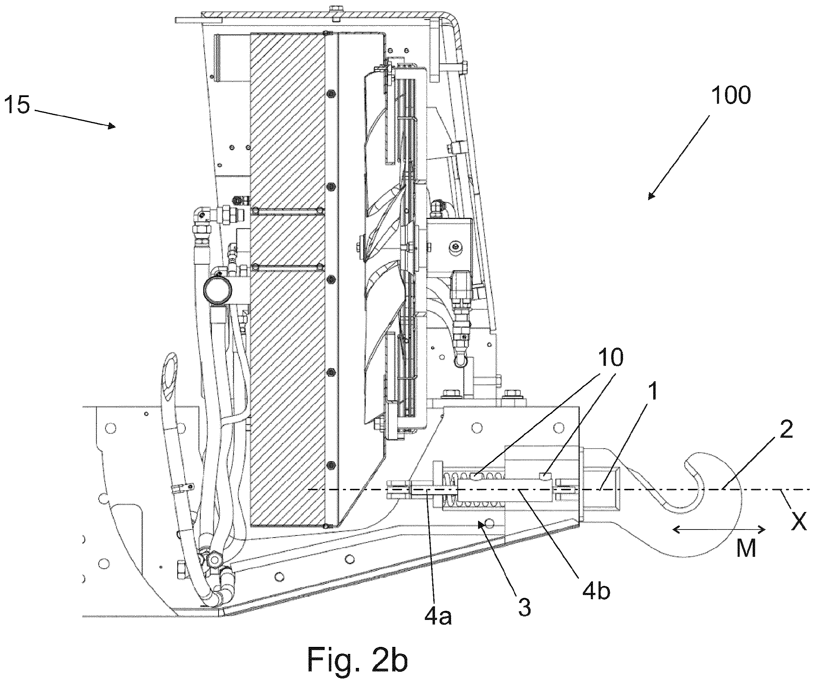

**Figures 2a** - **2d** are schematic views of a detail of an arrangement in partial cross-section. The arrangement 100 has been arranged to a mine machine 6, in close proximity of a radiator of a cooler arrangement 15 of the mine machine. However, the proximity to the radiator is not necessary, i.e. the function of the arrangement 100 is not dependent on the radiator.

In some embodiments, such as shown in Figures, the towing element 2 comprises a hook. In some another embodiments, the towing element is other type of element, such as a loop.

In an embodiment, the hydraulic actuator 3 comprises a hydraulic cylinder that is arranged at least substantially parallel to a moving direction M of the body part 1. The hydraulic actuator is arranged to get shorter along with towing force affecting to the towing element 2.

According to an aspect of the invention, the hydraulic cylinder is connected to the hydraulic circuit of the braking system of the mine machine 6 so that hydraulic fluid may flow from the hydraulic cylinder to said hydraulic circuit and vice versa. The connection may comprise hydraulic hoses, couplings etc.

In an embodiment, a piston side chamber, i.e. side opposite to a chamber of piston rod side, of the hydraulic cylinder is connected to the hydraulic circuit of the braking system of the mine machine 6. Volume of the piston side chamber is larger because the volume is not limited by piston rod, and thus a large volume flow of pressure fluid out from the cylinder is achieved compared to outer dimensions of the cylinder. This makes it possible to use smaller cylinders in the arrangement 100.

In an embodiment, there are at least two hydraulic actuators 3 arranged parallel in the arrangement 100, as in the embodiment shown in the Figures. The hydraulic actuators 3 may be arranged symmetrically in relation to a longitudinal axis X of the arrangement. In another embodiment, the hydraulic actuators 3, or just one hydraulic actuator 3, is/are arranged asymmetrically in relation to a longitudinal axis X of the arrangement.

First part 4a of the hydraulic actuator is attached to extension 7 of the body part 1. The extension 7 extends sideward in relation to the longitudinal axis X of the arrangement. The shown embodiment has two extensions 7 directed opposite directions. However, the attachment of the first part 4a may be realized some other structure, too, provided that the structure may transfer movements of the body part 1 to the first part. For instance, the extension may extend in any direction in relation to the longitudinal axis X of the arrangement.

Second part 4b of the hydraulic actuator is attached to a support element 5. In the embodiment shown in Figures 2a -2d, the support element 5 is attached to a frame part 12 of the mining machine by attaching means 11. Said attaching means may comprise screws, bolts, nuts or any fixation means known *per se.* In an embodiment, the support element 5 is attached to a frame part 12 by a welded joint.

The hydraulic actuator 3 comprises connectors 10 for connecting said actuator to a hydraulic circuit of a braking system of the mine machine 6. The hydraulic pressure created in the hydraulic actuator 3 due to the towing force affecting to the towing element 2 is arranged to release brakes of the mine machine 6.

In an embodiment, the arrangement 100 comprises just one hydraulic actuator only. In this embodiment, the hydraulic actuator may be arranged e.g. inside the body part 1.

In still another embodiments, the arrangement comprises more than two, for instance three or four, hydraulic actuators.

In an embodiment, the arrangement 100 comprises at least one returning element 8 that is arranged to return the body part 1 in its initial position in relation to the support element 5 when towing element 2 is released from the towing force. In the embodiments shown in Figures, the arrangement 100 comprises two coil spring elements as the returning element 8. In another embodiments, the returning element 8 comprises another type of mechanical spring, such as a leaf spring. In still another embodiment, the returning element 8 comprises a gas spring.

The spring elements are arranged separately from the hydraulic actuators 3. In another embodiment, the returning element 8 is integrated in the hydraulic actuator 3, either inside or outside thereof. In an embodiment, the chamber of piston rod side of the hydraulic cylinder is filled with gas, for example nitrogen. Said gas expands and its pressure drops when the cylinder is compressed. As the towing element 2 is released from the towing force, said gas in underpressurized state helps the cylinder to return in its initial length. In still another embodiment, the hydraulic cylinder comprises a spring, such as a coil spring, arranged inside the cylinder or around the exterior of the cylinder.

In an embodiment, the arrangement 100 comprises a stopper arrangement 9 that transfers at least a part of towing forces from the body part 1 to the frame of the machine. In the embodiment shown in Figures, the stopper arrangement 9 comprises an oblong through hole 14 in the body part 1, and a pin 13 arranged movably in the hole 14. The pin 13 is attached to the frame of the machine and arranged perpendicular to the moving direction M of the body part 1. The pin abuts against the hole 14 when the machine 6 is being towed. In another embodiment, the body part 1 comprises an abutting surface or extension (not shown) that abuts against a frame part of the mine machine and thus transfers towing forces in the frame of the mine machine.

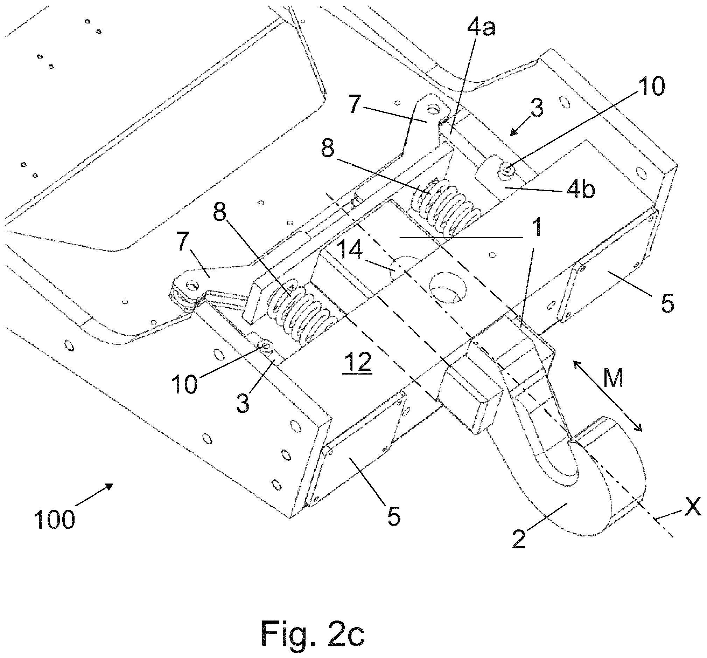

Figure 2c is showing the arrangement 100 in its rest state, i.e. when there is no towing force affecting to the towing element 2. The hydraulic actuators 3 and the returning elements 8 are in their extended states and the body part 1 retracted inside the structure of the mine machine. If the mine machine 6, for some reason, has lost vehicle power or hydraulic fluid pressure, an automatic fail-safe braking is on and brakes of the machine prevent the machine from moving.

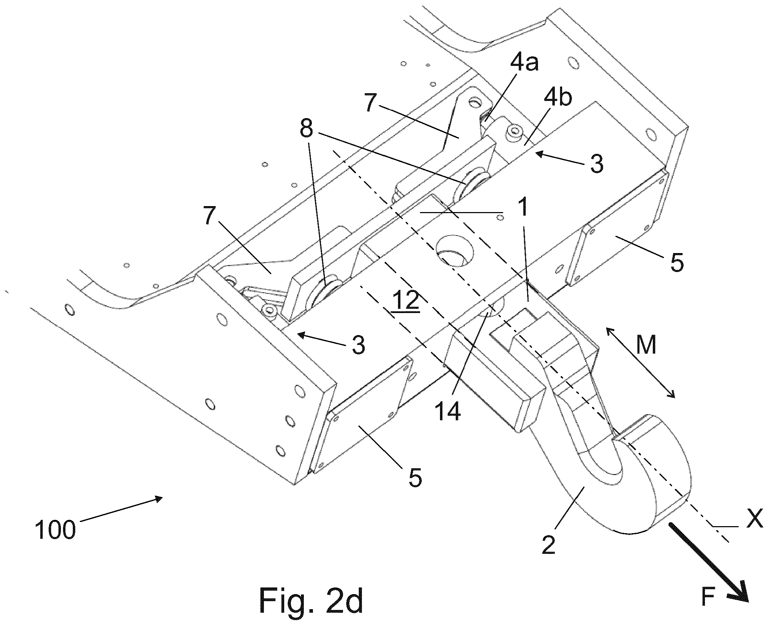

Figure 2d is showing the arrangement 100 when a towing force F is affecting to the towing element 2. Now the body part 1 is pulled out from the structure of the mine machine. The extensions 7 are pressing the hydraulic actuators 3 that thus get shorter. As a result, hydraulic fluid flows from the hydraulic actuators 3 to the hydraulic circuit of the braking system of the mine machine 6 releasing brakes thereof, allowing towing the mine machine 6.

As soon as the towing force F is withdrawn, the returning elements 8 force the arrangement 100 to return in the rest state shown in Figure 2c.

Following this, the brakes of the mine machine go on, and the mine machine does not move unintentionally. In an embodiment, the brakes go on when the towing element 2 and the body part 1 have retracted completely. In another embodiment, the brakes go on when the towing element 2 and the body part 1 have retracted a predetermined length towards the rest state. In other words, the brakes go on prior to the towing element 2 and the body part 1 have reached the rest state. Said predetermined length may be, e.g. 50 mm - 200 mm, for instance 80 mm, 100 mm, or 150 mm.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

### REFERENCE SYMBOLS

- 1: body part
- 2: towing element
- 3: hydraulic actuator
- 4a, b: parts of hydraulic actuator
- 5: support element
- 6: mine machine
- 7: extension
- 8: returning element
- 9: stopper arrangement
- 10: connector
- 11: attaching means
- 12: frame part of mining machine
- 13: pin
- 14: through hole
- 15: cooler arrangement

- 100: towing arrangement

- F: towing force
- M: moving direction
- X: longitudinal axis

## Claims

1. A towing arrangement for a mine machine, comprising
- a body part (1),
- a towing element (2) for allowing a towing tool to be connected to the towing arrangement (100),
- the towing element (2) being attached to the body part (1),
- a hydraulic actuator (3),
- a first part (4a) of the hydraulic actuator (3) attached to the body part (1), and
- a second part (4b) of the hydraulic actuator (3) attachable to a support element (5),
- the support element (5), when the towing arrangement being attached to the mine machine (6), being fixed to said mine machine (6),
- the body part (1) being arranged movable in relation to the support element (5),
- the body part (1) being arranged to move in relation to the support element (5) when a towing force is affecting to the towing element (2), and
- the hydraulic actuator (3) is arranged to get shorter along with said towing force affecting to the towing element (2),
**characterized in that**
- the hydraulic actuator (3) comprises connectors (10) for connection to a hydraulic circuit of a braking system of the mine machine (6), and
- hydraulic pressure created in the hydraulic actuator (3) due to the towing force affecting to the towing element (2) is arranged to release brakes of the mine machine (6).

2. The arrangement as claimed in claim 1, wherein the towing element (2) comprises a hook.

3. The arrangement as claimed in claims 1 or 2, wherein the hydraulic actuator (3) comprises a hydraulic cylinder.

4. The arrangement as claimed in any of the preceding claims, comprising at least two hydraulic actuators (3).

5. The arrangement as claimed in claim 4, wherein the hydraulic actuators (3) are arranged symmetrically in relation to a longitudinal axis (X) of the arrangement.

6. The arrangement as claimed in claims 4 or 5, wherein the body part (1) comprises at least one extension (7) arranged to extend sideward in relation to the longitudinal axis (X) of the arrangement,
- the first part (4a) of the hydraulic actuator being attached to the extension (7), and
- the extension (7) being arranged to forward the movement of the towing element (2) in the hydraulic actuator (3).

7. The arrangement as claimed in any of the preceding claims, comprising a returning element (8) arranged to return the body part (1) in its initial position in relation to the support element (5) when towing element (2) is released from the towing force.

8. The arrangement as claimed in claim 7, wherein the returning element (8) comprises at least one spring element.

9. The arrangement as claimed in any of the preceding claims, comprising a stopper arrangement (9) for transferring towing forces from the body part (1) to the frame of the machine.

10. The arrangement as claimed in any of the preceding claims, wherein the hydraulic actuator (3) is arranged at least substantially parallel to a moving direction (M) of the body part (1) .

11. The arrangement as claimed in any of the preceding claims, wherein the support element (5) comprises attaching means (11) for attachment the support element to the mine machine (6).

12. The arrangement as claimed in any of the preceding claims, being formed into a structural module retrofittable in a mine machine (6).

13. A mine machine, comprising the arrangement as claimed in any of the preceding claims.

14. The mine machine as claimed in claim 13, wherein a frame part (12) of the mine machine is arranged to perform as the support element (5).

## Patentansprüche

1. Schleppanordnung für eine Bergbaumaschine, umfassend
- einen Körperteil (1),
- ein Schleppelement (2), das ein Verbinden eines Schleppwerkzeugs mit der Schleppanordnung (100) ermöglicht,
- wobei das Schleppelement (2) am Körperteil (1) angebracht ist,
- einen hydraulischen Aktuator (3),
- einen ersten Teil (4a) des hydraulischen Aktuators (3), der an dem Körperteil (1) angebracht ist, und
- einen zweiten Teil (4b) des hydraulischen Aktuators (3), der an einem Trägerelement (5) anbringbar ist,
- wobei das Trägerelement (5), wenn die Schleppanordnung an der Bergbaumaschine (6) angebracht wird, an der genannten Bergbaumaschine (6) befestigt wird,
- wobei der Körperteil (1) bewegbar in Bezug auf das Trägerelement (5) angeordnet ist,
- wobei der Körperteil (1) angeordnet ist, um sich in Bezug auf das Trägerelement (5) zu bewegen, wenn eine Schleppkraft auf das Schleppelement (2) einwirkt, und
- der hydraulische Aktuator (3) angeordnet ist, um zusammen mit der auf das Schleppelement (2) einwirkenden Schleppkraft kürzer zu werden, **dadurch gekennzeichnet, dass**
- der hydraulische Aktuator (3) Verbinder (10) zur Verbindung mit einem Hydraulikkreis eines Bremssystems der Bergbaumaschine (6) umfasst, und
- hydraulischer Druck, der in dem hydraulischen Aktuator (3) aufgrund der auf das Schleppelement (2) einwirkenden Schleppkraft erzeugt wird, zum Lösen der Bremsen der Bergbaumaschine (6) eingerichtet ist.

2. Anordnung nach Anspruch 1, wobei das Schleppelement (2) einen Haken umfasst.

3. Anordnung nach Anspruch 1 oder 2, wobei der hydraulische Aktuator (3) einen hydraulischen Zylinder umfasst.

4. Anordnung nach einem der vorstehenden Ansprüche, umfassend mindestens zwei hydraulische Aktuatoren (3).

5. Anordnung nach Anspruch 4, wobei die hydraulischen Aktuatoren (3) symmetrisch in Bezug auf eine Längsachse (X) der Anordnung angeordnet sind.

6. Anordnung nach Anspruch 4 oder 5, wobei der Körperteil (1) mindestens eine Erweiterung (7) umfasst, die so angeordnet ist, dass sie sich seitwärts in Bezug auf die Längsachse (X) der Anordnung erstreckt,
- wobei der erste Teil (4a) des hydraulischen Aktuators an der Erweiterung (7) angebracht ist, und
- wobei die Erweiterung (7) so angeordnet ist, dass sie die Bewegung des Schleppelements (2) im hydraulischen Aktuator (3) weiterleitet.

7. Anordnung nach einem der vorstehenden Ansprüche, umfassend ein Rückführelement (8), das angeordnet ist, um den Körperteil (1) in seine anfängliche Position in Bezug auf das Trägerelement (5) zurückzuführen, wenn das Schleppelement (2) von der Schleppkraft gelöst wird.

8. Anordnung nach Anspruch 7, wobei das Rückführelement (8) mindestens ein Federelement umfasst.

9. Anordnung nach einem der vorstehenden Ansprüche, umfassend eine Stopperanordnung (9) zur Übertragung von Schleppkräften vom Körperteil (1) auf den Rahmen der Maschine.

10. Anordnung nach einem der vorstehenden Ansprüche, wobei der hydraulische Aktuator (3) zumindest im Wesentlichen parallel zu einer Bewegungsrichtung (M) des Körperteils (1) angeordnet ist.

11. Anordnung nach einem der vorstehenden Ansprüche, wobei das Trägerelement (5) Anbringungsmittel (11) zur Anbringung des Trägerelements an der Bergbaumaschine (6) umfasst.

12. Anordnung nach einem der vorstehenden Ansprüche, die zu einem in einer Bergbaumaschine (6) nachrüstbaren Strukturmodul ausgebildet ist.

13. Bergbaumaschine, umfassend die Anordnung nach einem der vorstehenden Ansprüche.

14. Bergbaumaschine nach Anspruch 13, wobei ein Rahmenteil (12) der Bergbaumaschine so angeordnet ist, dass es als das Trägerelement (5) fungiert.

## Revendications

1. Agencement de remorquage pour une machine de mine, comprenant
- une partie de corps (1),
- un élément de remorquage (2) pour permettre à un outil de remorquage d'être relié à l'agencement de remorquage (100),
- l'élément de remorquage (2) étant raccordé à la partie de corps (1),
- un actionneur hydraulique (3),
- une première partie (4a) de l'actionneur hydraulique (3) raccordée à la partie de corps (1), et
- une seconde partie (4b) de l'actionneur hydraulique (3) pouvant être raccordée à un élément de support (5),
- l'élément de support (5), lorsque l'agencement de remorquage est raccordé à la machine de mine (6), étant fixé à ladite machine de mine (6),
- la partie de corps (1) étant agencée pour être mobile par rapport à l'élément de support (5),
- la partie de corps (1) étant agencée pour se déplacer par rapport à l'élément de support (5) lorsqu'une force de remorquage est appliquée à l'élément de remorquage (2), et
- l'actionneur hydraulique (3) est agencé pour devenir plus court avec ladite force de remorquage appliquée à l'élément de remorquage (2),
**caractérisé en ce que**
- l'actionneur hydraulique (3) comprend des connecteurs (10) pour se relier à un circuit hydraulique d'un système de freinage de la machine de mine (6), et
- une pression hydraulique créée dans l'actionneur hydraulique (3) sous l'effet de la force de remorquage appliquée à l'élément de remorquage (2) est agencée pour libérer des freins de la machine de mine (6).

2. Agencement selon la revendication 1, dans lequel l'élément de remorquage (2) comprend un crochet.

3. Agencement selon la revendication 1 ou 2, dans lequel l'actionneur hydraulique (3) comprend un vérin hydraulique.

4. Agencement selon l'une quelconque des revendications précédentes, comprenant au moins deux actionneurs hydrauliques (3).

5. Agencement selon la revendication 4, dans lequel les actionneurs hydrauliques (3) sont agencés symétriquement par rapport à un axe longitudinal (X) de l'agencement.

6. Agencement selon la revendication 4 ou 5, dans lequel la partie de corps (1) comprend au moins une extension (7) agencée pour s'étendre vers le côté par rapport à l'axe longitudinal (X) de l'agencement,
- la première partie (4a) de l'actionneur hydraulique étant raccordée à l'extension (7), et
- l'extension (7) étant agencée pour acheminer le mouvement de l'élément de remorquage (2) dans l'actionneur hydraulique (3).

7. Agencement selon l'une quelconque des revendications précédentes, comprenant un élément de retour (8) agencé pour retourner la partie de corps (1) à sa position initiale par rapport à l'élément de support (5) lorsque l'élément de remorquage (2) est libéré de la force de remorquage.

8. Agencement selon la revendication 7, dans lequel l'élément de retour (8) comprend au moins un élément de ressort.

9. Agencement selon l'une quelconque des revendications précédentes, comprenant un agencement de butée (9) pour transférer des forces de remorquage de la partie de corps (1) au châssis de la machine.

10. Agencement selon l'une quelconque des revendications précédentes, dans lequel l'actionneur hydraulique (3) est agencé au moins sensiblement parallèle à une direction de déplacement (M) de la partie de corps (1).

11. Agencement selon l'une quelconque des revendications précédentes, dans lequel l'élément de support (5) comprend des moyens de raccordement (11) pour raccorder l'élément de support à la machine de mine (6).

12. Agencement selon l'une quelconque des revendications précédentes, étant formé dans un module structurel adaptable dans une machine de mine (6).

13. Machine de mine, comprenant l'agencement selon l'une quelconque des revendications précédentes.

14. Machine de mine selon la revendication 13, dans laquelle une partie de châssis (12) de la machine de mine est agencée pour servir d'élément de support (5).
